(19) Europäisches Patentamt
European Patent Office
Office européen des brevets

(11) **EP 2 280 241 A2**

(12) **EUROPEAN PATENT APPLICATION**

(43) Date of publication:
**02.02.2011 Bulletin 2011/05**

(51) Int Cl.:
***G01C 21/00*** *(2006.01)* ***G05D 1/00*** *(2006.01)*

(21) Application number: **10251329.8**

(22) Date of filing: **24.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.07.2009 GB 0913416**
**09.04.2010 GB 1005907**

(71) Applicant: **Qinetiq Limited**
**London SW1E 6PD (GB)**

(72) Inventor: **Berry, Andrew James**
**Farnborough, Hampshire GU14 0LX (GB)**

(74) Representative: **Northway, Daniel Robert et al**
**QinetiQ Limited**
**Intellectual Property**
**Malvern Technology Centre**
**St Andrews Road**
**Malvern**
**Worcestershire WR14 3PS (GB)**

(54) **Vehicle control**

(57) A method of vehicle control, in which a global target trajectory is tracked by successively calculating an optimum local trajectory in 4D output space to approach the global trajectory and observe vehicle performance limits and surrounding obstacle clearance. A receding horizon framework is proposed which successively updates the optimum local trajectory according to the current state of the vehicle. Processing overheads can be kept to a minimum by calculating performance limits offline, and optimisation is simplified by using a cost function approach.

Figure 7

**Description**

The present invention relates to control of vehicles and other objects and in particular to trajectory tracking. The present invention finds particular application in the control of unmanned vehicles (in particular small or micro air vehicles) operating within complex obstacle-rich environments.

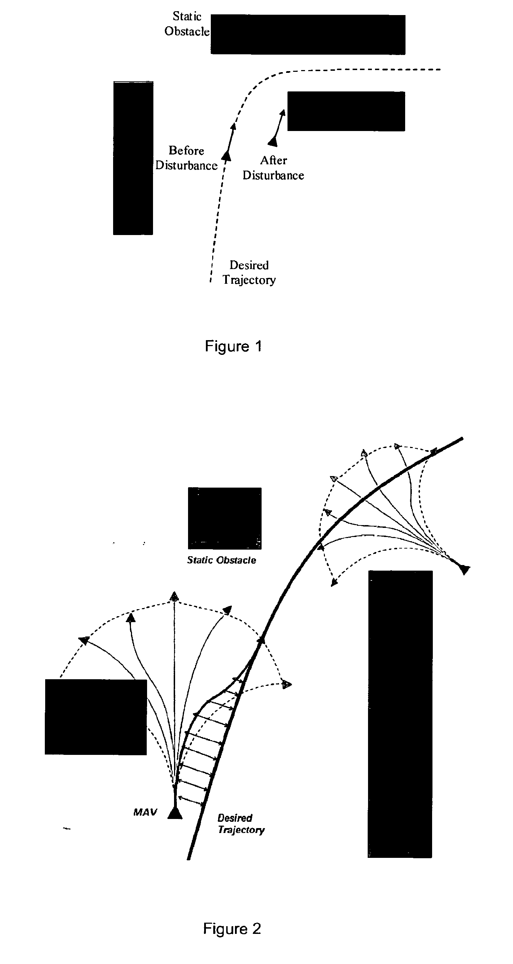

Many scenarios exist for the use of autonomous vehicles within complex environments where a global goal-oriented plan is either static or pseudo-static (i.e. the global plan is liable to change as new information or goals are received, but this is infrequent enough that lower layers of the planning, guidance and control architecture can consider it as unchanging). An example of this is an Area-Search mission where a micro air vehicle (MAV) is used to provide reconnaissance imagery of specific streets and locations. There are two primary complications to tracking a pseudo-static trajectory within a complex environment: disturbances (i.e. tracking errors, gusts, turbulence etc.) and unexpected obstacles (detected en route by on-board sensors). Disturbances, primarily due to wind (gusts & turbulence) are particularly important for MAVs, where the scale of the disturbance is likely to be significant when compared to typical vehicle operating speeds. It can therefore be argued that it is unrealistic (or overly restrictive in terms of operating conditions) for a MAV to be expected to hold accurately a pre-defined obstacle free trajectory. An example of this is shown in Figure 1 where a MAV is depicted following a continuous trajectory in the presence of known static obstacles both before and after a gust disturbance. It can be seen that in order to safely re-acquire the trajectory, the tracking algorithms must be aware of the local obstacle space. It can also be seen from this example that re-acquiring the trajectory and continuing with the mission can be achieved without impacting the global plan.

Commonly, obstacles will be encountered which do not affect the global plan (eg overhead cables, other vehicles, etc). In such cases, intuitively a human pilot would manoeuvre around the obstacle without it significantly affecting the global plan. For example, if another MAV is encountered while following a trajectory then it should be relatively straightforward, if the other vehicle's flight path can be estimated, to manoeuvre around it and re-join the original trajectory. Similarly, if while following a trajectory an overhead cable is detected then it only requires a small height adjustment to avoid a collision, which can again be achieved without regenerating the global plan. These scenarios are similar to a human driving a car while being directed by a GPS route planner. The route planner provides the global goal directed plan which the driver is then responsible for following, while performing lane following / changing, traffic de-conflictions and adjusting for other local environment issues, i.e. traffic lights, obstacles on the road, speed restrictions etc.

It is an object of the invention to provide improved vehicle control. It is an object of certain embodiments of the present invention to provide a single control framework that is capable of accurately tracking a demanded 4D trajectory, while also coping with the presence of any detected obstacles.

According to a first aspect of the invention there is provided a method of control of a vehicle, said method comprising the steps of providing a global target trajectory; determining the current state of said vehicle; deriving from said current state trajectory performance limits for said vehicle; calculating an optimum local trajectory in 4D output space to approach said global trajectory and observe said performance limits; outputting control inputs to control the vehicle corresponding to said selected trajectory; and updating the current state of said vehicle, and deriving updated trajectory performance limits and an updated optimum local trajectory accordingly.

By iteratively repeating the step of calculating an optimum local trajectory according to the current state of the object at a series of points in time, a receding horizon control (RHC) or model predictive control framework is provided that continuously designs and tracks dynamically feasible local trajectories that approach the global plan. For example the local trajectory update rate might advantageously be arranged to be 10Hz in embodiments.

Whereas receding horizon control is more typically used in control theory, in this aspect of the invention the local trajectory is calculated in 4D output space. That is to say in three physical dimensions and time. As will be explained in greater detail, this allows a greater proportion of dynamic modelling of the object to be performed off line, therefore reducing processing overheads or conversely increasing performance for an equivalent processing load.

It is presently proposed to adopt a top-down approach where the local trajectory is designed directly in 4D output space. The task of tracking that trajectory is not central to this aspect of the invention, and can be left to another element. Typically, a control module is used to calculate control signals for actuators etc which correspond to the calculated local trajectory. Dynamic feasibility is therefore provided in terms of the trajectory rather than control inputs, i.e. maximum normal / lateral accelerations, axis coupling etc. This is in contrast to a bottom-up approach in which control signals are calculated first, before the resulting vehicle trajectory is calculated via forward simulation of a vehicle model. The accuracy of such a control space approach is dependent on the order of the vehicle model, with non-linear 6 degree of freedom (DOF) models providing highly accurate results at the expense of computation time.

The global target trajectory will typically be generated by a global planner or planning layer and is typically static (in comparison with the timescales involved in local trajectory calculation). In more commonly anticipated embodiments the global trajectory will define a complete path along which it is desired to control the target object, for example a search path, or a desired route between two fixed waypoints. However, the global target trajectory need not be a complex 3D path, and might simply be provided as an instruction for the object to continue on its present direction or velocity in simpler implementations.

The current state of the object will typically be determined by sensors on the vehicle, but may alternatively or additionally be determined by observation of the vehicle by external sensors if available. The current state may be defined in terms of one or more of position, velocity, acceleration and rate of change of acceleration for example. In presently preferred embodiments, velocity, acceleration and rate of change of acceleration have been found to provide suitable information on the current state to give desirable performance. Thus in certain embodiments, 9 variables (three components for each vector parameter) are determined to asses the current state. If position is additionally required, this may increase to 12. Such parameters can be measured using air speed sensors, accelerometers and/or rate gyros for example.

Vehicle performance limits are desirably calculated off-line, and can be stored in a look up table, referenced by current vehicle state.

The local trajectory is calculated over a fixed time period, or horizon, in preferred embodiments. By maintaining a fixed horizon period at each iteration, it has been found that a 4D output space trajectory can be specified more efficiently thereby simplifying the process of optimisation.

In certain embodiments the local trajectory is expressed as polynomial functions of a curve parameter, and in such embodiments it has been found that maintaining a fixed horizon period at each iteration allows the local trajectory to be specified by only 3 polynomials thereby reducing the total number of variables involved. For example, the local trajectory can advantageously be expressed by component polynomial representations of velocity in three orthogonal directions.

The use of polynomial functions to express trajectories in embodiments affords the advantage that fundamentally vehicle trajectories are smooth, rather than jagged or discontinuous. Furthermore a continuous polynomial curve can be discretized to provide varying resolution as desired, and the resolution can be controlled or adapted according to the system performance and computational requirements without altering the smoothness of the curve.

When imposing performance limits via polynomials, all manoeuvres up to the limits will be allowed, therefore allowing gentle maneuvering to occur as easily as maximum performance manoeuvres. This a significant advantage over methods that propagate trajectories using only the maximum manoeuvres limits (i.e. maximum turn rate / acceleration). These approaches result in maximum performance manoeuvres being expected, even, for example, when in low-gain flight regimes. Embodiments of the present invention however can provide varying degrees of aggression.

If the basis functions of the polynomial curve are known then it is fully described by the design variables only. For example, a 6th order curve is described by only seven constant values. This allows efficient storage and transmission of trajectory information, for example for a cooperative collision avoidance scheme where MAVs transmit their trajectory intentions to each other.

The use of a fixed time period additionally facilitates the use of boundary conditions in further reducing the number of variables. Enforcing initial BCs means that the smoothness of the designed trajectory from the current vehicle state can be ensured. Additionally, end conditions can be enforced if required. Each imposed BC reduces the number of design variables by one, reducing the dimension of the design problem.

Desirably the fixed time period or horizon is greater than or equal to 5 seconds, and further desirably the period is less than or equal to 20 seconds. A period of approximately 10 seconds has been found to provide appropriate performance in certain embodiments, although longer and shorter periods may be suitable according to application specifics, eg sensor horizon and feasible vehicle dynamics. The horizon used determines the local trajectory length via vehicle speed. A longer trajectory may provide superior overall control but at the expense of increased processing, however the trajectory is desirably greater than the feasible vehicle dynamics, and preferably related to the sensor horizon.

A 3D obstacle map is preferably made available and can be updated by sensors, typically mounted on the vehicle, or otherwise able to provide object data in the vicinity of the vehicle and/or global trajectory. Proximity sensors might typically be mounted on the vehicle for example.

Obstacles are preferably taken into account by assigning a cost function to an obstacle as part of the optimisation of the local trajectory, rather than by representing obstacles as a constraint on the optimisation process. A potential cost function has been found to be suitable in embodiments. There are two significant advantages of the potential function approach. Firstly, no obstacle depth information is required, therefore suiting obstacle maps that are generated en-route by on board sensors. Secondly, the gradient of the cost function remains continuous aiding simple gradient based optimization algorithms.

Vehicle performance limits can also be imposed by the use of cost functions in some embodiments. In this way both vehicle performance limits and obstacles can be accounted for without the need for constrained optimisation. Unconstrained optimisation is advantageously less complex than constrained optimisation.

An objective function (J) is typically defined incorporating trajectory tracking criteria (eg position error, speed error) and the role of the optimization process is to find the set of design variables that aim to minimize this function while also satisfying any constraints, i.e. vehicle performance limits. In real-time embodiments it is unlikely that globally optimal solutions will be found however sub-optimal solutions are expected to be capable of providing a high level of performance.

Minimization of the chosen objective function may be performed by any suitable algorithm. The Matlab function fmincon, and a steepest descent algorithm are proposed, with the gradient of the cost function approximated by a finite difference calculation at each major iteration.

The position error (defined as the Euclidean distance between a point of interest and the nearest point on the demanded trajectory) is typically calculated as part of the evaluation of the objective function. A single nearest point calculation for each point on the receding horizon trajectory rapidly becomes computationally prohibitive however.

Accordingly there is proposed a method for evaluating position errors along a proposed local vehicle trajectory with respect to a desired vehicle trajectory, comprising performing a nearest point calculation to determine positional error for the current position of a vehicle, performing a curve fit to provide an approximation of said desired trajectory based on said nearest point calculation and the length of the local object trajectory, and performing a series of position error calculations between said local object trajectory and said approximation.

By using a polynomial to approximate the desired trajectory, interpolation to any specified resolution is afforded, and so a series of points along the approximated trajectory can be selected in accordance with the resolution of the local object trajectory.

There is further proposed a vehicle adapted for control by any method disclosed herein. The vehicle is preferably provided with a guidance unit or processor adapted to implement the necessary calculations and process steps. The vehicle will typically also incorporate a sensor or sensor array for determining the current state of the vehicle and or objects or obstacles, and may also typically include a control module capable of recieving control inputs and effecting vehicle movement accordingly, by control of motors or control surfaces for example.

The term 'vehicle' used herein is intended to encompass both manned and unmanned vehicles, and extends to any type of object which it is desired to control relative to a global trajectory.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein. Methods of the present invention may therefore be performed by a computer or processor.

The invention extends to methods, apparatus and/or use substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:

Figure 1    shows a gust disturbance acting on a vehicle in a complex environment;

Figure 2    illustrates performance constraints of an MAV tracking a global trajectory;

Figure 3    illustrates polynomial trajectory shaping;

Figure 4    shows 6th order Bezier basis functions;

Figure 5    shows a potential filed about a point obstacle;

Figure 6    illustrates evaluation of position errors along a proposed trajectory;

Figure 7    provides a system overview of a receding horizon control framework.

It can be seen that a class of obstacles and disturbances will exist which when encountered do not affect the global plan, and it is therefore desirable to handle these situations at a local level. This is analogous to a delegation of authority from the global planner to the autonomous asset to manoeuvre as required to avoid conflicts, but to stick as closely as possible to the assigned plan. The primary advantage of this approach is that it removes the burden of regular re-design of a potentially complex global plan that may involve the coordination of several vehicles. One approach for providing this functionality is to provide trajectory tracking algorithms with an awareness of the surrounding obstacle space, i.e. a 'situation awareness'. This can be achieved by the provision of a continuous local motion planning layer, allowing additional issues such as local wind strength to be dealt with in detail, as opposed to the broad approximations that would be required during global planning.

Examples disclosed herein propose a situation aware trajectory tracking method for an object operating within a complex low level urban environment by formulating a real-time optimization problem, combining:

1) Vehicle Performance Limits
2) Local Obstacle Information
3) Environmental Conditions

into a receding horizon framework that continuously designs and tracks safe and dynamically feasible local trajectories that result in the global plan being followed as closely as possible, given both disturbances and unexpected obstacles.

It is desired to increase the fidelity of vehicle performance modelling used in the trajectory design process outlined above, therefore vehicle performance limits should be defined and enforced.

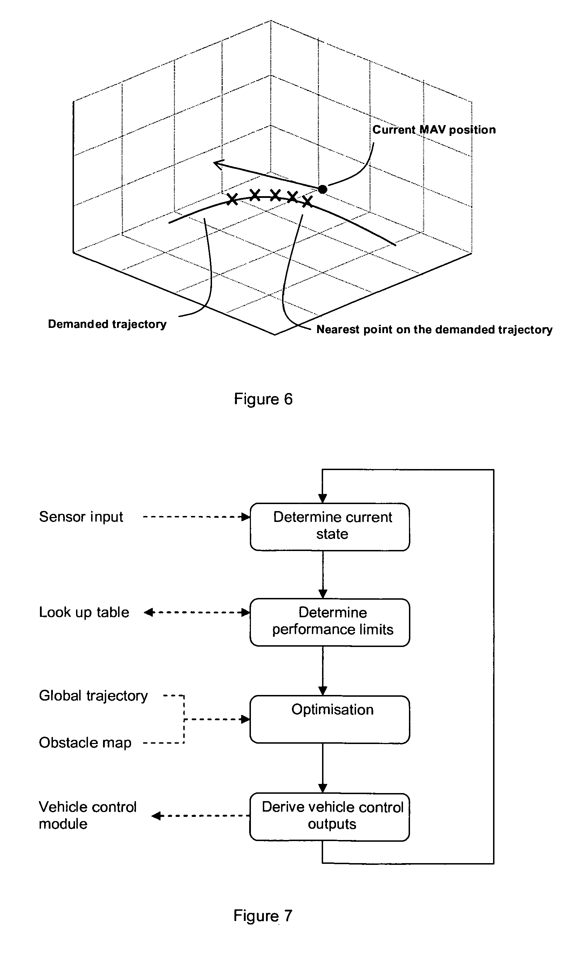

With reference to Figure 7, the main steps of an example receding horizon framework are illustrated in a process flow. Certain inputs and outputs along the process are also illustrated by dashed line. In an initial step the current state of the vehicle is determined according to sensor inputs provided. From this performance limits are determined with reference to a look up table. Together with the resulting performance limits, global trajectory and obstacle data are input to an optimisation process, which outputs a suitable local trajectory to a vehicle control output stage. This in turn provides control signals to a vehicle control module to manoeuvre the vehicle. The main steps are shown to repeat, which will be performed at a desired frequency, with the current state of the vehicle being updated to reflect movement of the vehicle since the previous cycle.

In a control space approach, dynamic feasibility is automatically provided by the vehicle model, i.e. by limiting the control signals to the feasible range. In an example of the presently proposed output space design, however, the dynamic limits are obtained from a vehicle performance map that can be generated off-line. The use of a performance map to specify the output space performance limits has the advantage that it transfers some of the processing to an off-line stage, therefore removing the need for a potentially complex on-line vehicle model. Detailed performance limits can be generated from a complex non-linear model, then scheduled with vehicle state and accessed rapidly via a table look-up process. Any reduction in the computational effort can then be used to either increase the rate of execution (providing faster response to disturbances and newly detected obstacles) or to increase the design horizon towards the sensor horizon of the vehicle. Once the vehicle performance limits are defined, then ensuring that they are adhered to can be handled by an optimization algorithm as will be described below.

The performance characteristics / limits of the vehicle are known in advance (as fixed by the vehicle design process), and it is desired to transform the results of these characteristics into the current situation, and understand their impact. This is illustrated in Figure 2 where a MAV is shown tracking a trajectory in the presence of both static & dynamic obstacles. The performance limits of the vehicle (for the current state) are shown as a feasible manoeuvre envelope emanating from the vehicle position, and a role of a situation aware trajectory tracker is to calculate (continually) this set of feasible trajectories, then select the optimal one for execution. The positional errors at a series of points along the selected local trajectory, relative to the desired global trajectory are shown diminishing as the desired trajectory is acquired. Only the initial portion of the local trajectory will be executed, before repeating the process using the latest information. This has been cast in the present example as a receding horizon problem with a vehicle model used to provide the dynamic performance limits, and the trajectory selection via a real-time optimization problem. This is expected to be a computationally intensive process, therefore it is advantageous to provide a solution framework that performs an increased quantity of the calculation off line.

The situation aware trajectory tracking algorithms of the present example sit within the middle layer of the following planning, guidance and control architecture.

Global Planning - Mission / goal focused, possibly coordinating multiple vehicles. Updated in response to new information / mission goals, but this is expected to occur on a timescale that allows the lower layers to assume that it is static. Includes at least 1 st order vehicle dynamics.

Local Motion Planning - Planning horizon limited to a maximum of the sensor horizon, allowing greater emphasis on accurate vehicle dynamics and rapid reaction to disturbances. Responsible for execution of the global trajectory given detailed knowledge of the local situation (i.e. disturbances, obstacles detected en-route, local wind conditions).

Autopilot Guidance & Control Functionality - This layer represents traditional autopilot functionality such as provision of altitude, speed, heading demand, as well as inner loop / stabilization functionality as required. This layer is expected to handle any complex vehicle non-linearities, control coupling etc.. and provide a defined response performance to commands from the situation planning layer.

The approach used for describing the local trajectories in preferred embodiments is to use polynomial functions. Polynomials curves are defined herein as a linear combination of constants (the design variables) and basis functions, as shown in equation (1).

$$\mathbf{p}(\tau) = \sum_{i=0}^{n} \mathbf{k}_i \mathbf{B}_i(\tau) \qquad (1)$$

where:

$p(\tau)$   = *curve* as a *function* of $\tau$
r   = *curve parameter. min / max define the range of the basis function*
n   = *order of the polynomial*
$k_i$   = *scaling factor for each of then order basis functions (design variables)*
$B_i(\tau)$   = *$I^{th}$ order basis function*

Several options exist for the choice of basis function (i.e. Bernstein, Chebyshev, Laguerre, etc..) but all can be reduced to the following basic form:

$$\mathbf{p}(\tau) = \mathbf{k}_0 \tau^0 + \mathbf{k}_1 \tau^1 + \mathbf{k}_2 \tau^2 + \mathbf{k}_3 \tau^3 + \mathbf{k}_4 \tau^4 + \mathbf{k}_5 \tau^5 + \mathbf{etc.}. \qquad (2)$$

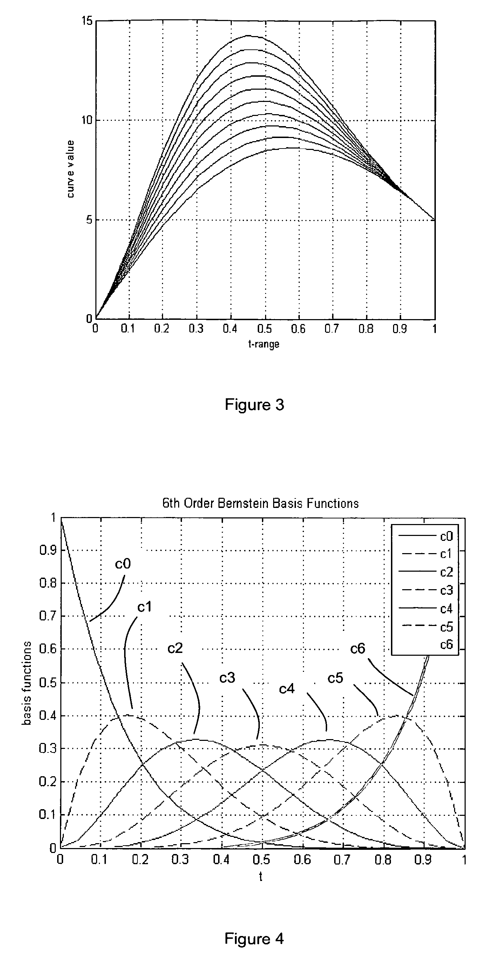

The choice of basis functions, as well as the range of the associated curve parameter ($\tau$), define the influence of each of the design variables on the final curve, therefore any optimization process will develop differently depending on this choice. The trajectory design process for polynomial descriptions consists of varying the scaling factors for the basis functions, therefore a 6th order curve has seven design variables. An example of this is shown in Figure 3, where the 3rd design variable is varied on a 5th order Bezier curve.

The presently described example uses $6^{th}$ order Bezier polynomials, although other orders are possible and may be more suitable in different applications. A fixed time horizon of $T_h$=10secs is used in the present example, and a single polynomial is used to describe each axis of a trajectory. There are two main advantages of using Bezier curves, the first of which is that the basis functions are designed to help de-couple the influence of each function over the length of the curve (as shown in Figure 4 - the highest order function has most impact at the end of the curve and least at the start, with the lowest order function being the opposite). Secondly, Bezier curves have an intuitive relationship between the design variables and the resulting curve, allowing both upper and lower bounds to be defined for each control variable, as well as easing manual design & debugging.

As noted above, the use of a fixed time horizon allows simple and rapid calculation of time differentials and integrals of each polynomial (shown below). Time differentials of the polynomials allow performance constraints to be verified / enforced. This fixed time specification also results in the time profile being specified alongside a position or speed profile, therefore allowing a 4D trajectory to be specified by only 3 polynomials.

For example, a forward speed (u) profile over the length of the receding horizon is described by:

$$\mathbf{u}(\tau) = \mathbf{k}_0 \mathbf{B}_0(\tau) + \mathbf{k}_1 \mathbf{B}_1(\tau) + \mathbf{k}_2 \mathbf{B}_2(\tau) + \mathbf{k}_3 \mathbf{B}_3(\tau) + \mathbf{k}_4 \mathbf{B}_4(\tau) + \mathbf{k}_5 \mathbf{B}_5(\tau) + \mathbf{k}_6 \mathbf{B}_6(\tau) \qquad (3)$$

where:

$B_i(\tau)$ is *the $I^{th}$ Bezier* basis *function, defined for* $0 \le \tau \le 1$

Time differentials of the polynomial are calculated from:

$$\dot{\mathbf{u}}(\tau) = \frac{\mathbf{du}(\tau)}{\mathbf{dt}} = \frac{\mathbf{du}(\tau)}{\mathbf{d}\tau} \times \frac{\mathbf{d}\tau}{\mathbf{dt}}$$

where a fixed time horizon is employed, the time profile of the polynomial is calculated from:

$$t(\tau) = \tau \times T_h \tag{4}$$

Therefore

$$\frac{d\tau}{dt} = \frac{1}{T_h}$$

which leads to:

$$\dot{u}(\tau) = \frac{1}{T_h} \left\{ \sum_{i=0}^{6} \left( k_i \frac{dB_i(\tau)}{d\tau} \right) \right\} \tag{5}$$

and:

$$\ddot{u}(\tau) = \frac{1}{T_h^2} \left\{ \sum_{i=0}^{6} \left( k_i \frac{d^2B_i(\tau)}{d\tau^2} \right) \right\} \tag{6}$$

Similarly, noting that the basis functions can be integrated as simply as they can be differentiated, we also get:

$$x(\tau) = \int u(\tau) = x_0 + \sum_{i=0}^{6} \left( k_i \int B_i(\tau) d\tau \right) \tag{7}$$

The differentials and integrals of the basis functions terms (w.r.t. $\tau$) can all be calculated off line, as they are set by the basis function definitions. This means that on line calculation of time differentials and integrals of the various polynomials can be performed as rapidly as the calculation of the original curve.

The analytical calculation of time differentials of polynomials, allows performance limits and BCs to be imposed on rates, acceleration, rates of accelerations etc.. with minimal additional calculation.

Initial boundary conditions (BCs) can be enforced on the polynomials such that a newly calculated trajectory propagates smoothly from the current vehicle state. For example, assuming that the vehicle sensor pack was capable of measuring $u$, $\dot{u}$ & $\ddot{u}$, then these values can be enforced by algebraic manipulation of the polynomials describing the $u$, $\dot{u}$ & $\ddot{u}$ profiles. Setting $\tau = 0$ in equations (3), (5) & (6) and solving for $k_0, k_1$ & $k_2$ results in:

$$\begin{aligned} k_0 &= u_0 \\ k_1 &= \frac{\dot{u}_0 \times T_h}{6} + k_0 \\ k_2 &= \frac{\ddot{u}_0 \times T_h^2}{30} - k_0 + 2k_1 \end{aligned} \tag{8}$$

Therefore the design space for a single polynomial has been reduced from seven to four, via the application of three initial BCs. Note that this process can be repeated for any polynomial that we have BCs for, therefore significantly reducing the dimension of the final optimization problem. Boundary conditions can also be applied to the end of the curves, resulting in a further reduction in the design space. However, during testing it was found that this could be too restrictive, particularly when using a fixed time horizon.

In one example, obstacles are handled using a penalty function approach, where proximity to a known obstacle is punished via an obstacle term within a cost function (described below in relation to optimisation). The cost of proximity of a point to an obstacle can be calculated via a potential function such as the Yukawa function for example:

$$\text{potential} = A \frac{e^{-\alpha d}}{d} \tag{9}$$

where:

A = design parameter - scaling factor
$\alpha$ = design parameter - decay rate
d = distance of the point to the nearest point on the obstacle

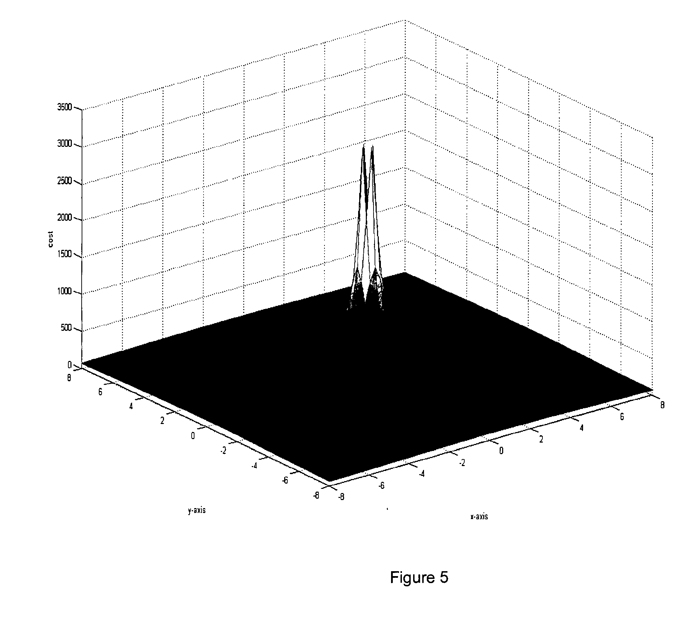

An example potential field around a point obstacle is shown in Figure 5, where it can be seen that the proximity cost approaches infinity as the distance to the obstacle approaches zero. Acceptable safe clearance distances can be defined using the potential field design parameters. The rise rate of the proximity function determines the speed of required reaction by the vehicle, and should preferably be selected in accordance with the vehicle performance limits.
There are two significant advantages of the potential function approach. Firstly, no obstacle depth information is required, therefore suiting obstacle maps that are generated en-route by on board sensors. Secondly, the gradient of the cost function remains continuous aiding simple gradient based optimization algorithms.
Dynamic obstacles can be handled within this same framework by time-stamping the obstacle position, then calculating proximity costs based on trajectory time. This increases the memory storage space required for each obstacle, but need not significantly affect the process otherwise. If other unmanned vehicles are expected to be encountered (i.e. several MAVs may be cooperatively used to perform a mission) then simple rules-of-the-air can be incorporated into the obstacle cost term to alter the attractiveness of maneuvering in different directions. This type of simple decentralized collision avoidance behavior mimics human pilot / driver behavior, and is likely to be a key enabler of unmanned vehicle operation in complex environments that contain other vehicles, both manned and unmanned. Further consideration is given to dynamic obstacles below.
The role of the optimization process is to find the set of design variables that aim to minimize an objective function (J) while also satisfying any constraints, i.e. vehicle performance limits. In real-time embodiments it is unlikely that globally optimal solutions will be found at each trajectory design iteration. However, sub-optimal solution are expected to be capable of providing a high level of performance.
Minimization of the chosen objective function may be performed by any algorithm capable of providing acceptable performance in the available time. Initial tests were conducted using the Matlab function fmincon, with the vehicle performance constraints enforced directly by the fmincon algorithm. A steepest descent algorithm is also proposed, with the gradient of the cost function approximated by a finite difference calculation at each major iteration. A line search was then conducted in the chosen direction to find the optimal step size. Vehicle performance constraints were implemented via penalty function terms, again using Yukawa potential functions to punish the proximity of a vehicle state to the defined performance limit.
An example objective function is shown in equation (10):

$$J = \sum_{i=1}^{res} \left( \lambda_{position} C_i^{position} + \lambda_{speed} C_i^{speed} + \lambda_{constra\,int} C_i^{constra\,int} + \lambda_{obstacle} \sum_{j=1}^{n} C_i^{obstacle_j} \right) + \lambda_{ter\,min\,al} C^{ter\,min\,al} \tag{10}$$

Where :

$$C_i^{position} = \left( x_i^{demand} - x_i^{design} \right)^2 + \left( y_i^{demand} - y_i^{design} \right)^2 + \left( z_i^{demand} - z_i^{design} \right)^2$$

$$C_i^{speed} = \left(u_i^{demand} - u_i^{design}\right)^2 + \left(v_i^{demand} - v_i^{design}\right)^2 + \left(w_i^{demand} - w_i^{design}\right)^2$$

$$C_i^{obstacle_j} = A\frac{e^{-\alpha d_j}}{d_j}$$

$$C_i^{constraint} = C_i^{u\_constraint} + C_i^{v\_constraint} + C_i^{w\_constraint}$$

$$C_i^{u\_constraint} = C_i^{u-Min} + C_i^{u-Max} + C_i^{\dot{u}-Min} + C_i^{\dot{u}-Max} + C_i^{\ddot{u}-Min} + C_i^{\ddot{u}-Max}$$

$$C^{u_{Min}} = B \times \frac{e^{(-\beta m)}}{m}$$

$$m = 100 - \left(\frac{state\_current}{state\_\lim it}\right) \times 100$$

$$C^{ter\min al} = \left(\varphi_{res}^{dmand} - \varphi_{res}^{design}\right)^2 + \left(\gamma_{res}^{demand} - \gamma_{res}^{design}\right)^2$$

res = resolution of the *receding horizon trajectory*
**n** = *number of obstacles*
λ = *scaling parameters*
φ = *heading angle*
γ = *flight path angle*
**A** = *obstacle* cost *design parameter*
α = obstacle cost *design parameter*
**d**$_j$ = *distance between point i on the receding horizon trajectory and the nearest point on the $l^{th}$ obstacle.*
**B** = *performance constraint* cost *design parameter*
β = *performance constraint cost design parameter*
**m** = *performance constraint margin*

The objective function represents the mathematical formulation of the output performance priorities of the system, i.e. the desired balance between manoeuvre effort and tracking accuracy, which may naturally change during the course of a mission. This introduces the potential of a situation dependent cost function, for example position error may only be important at key times during a mission, otherwise time control may have priority. Alternatively, the cost function may also vary during the course of a single trajectory, i.e. heading not important until near to trajectory. Another possibility is to set the convergence criteria of the optimization algorithm to match current mission performance requirements, i.e. only accept position errors of less than a defined tolerance. The other side of this output performance driven optimization is that the search may be allowed to 'relax' during operation in less complex environments such as during a transit to the area of interest.

Gradient based searches are susceptible to being trapped by local minimums in the cost function, however in most cases this doesn't significantly affect performance. This is partially due to the fact that regular re-design process allows an escape option at the next iteration, but primarily because 'optimal' performance is not necessary for most applications. However, in certain circumstances (i.e. late detection of obstacles) a gradient search alone may not be sufficient to avoid a collision, therefore a global minimum is desirable. A possible approach proposed here to escape local minimums and ensure sufficient coverage of the overall design space is to create a coarse grid of the feasible design space that allows a series of set design points to be compared to the solution from the gradient search. An example candidate trajectory set can be selected to provide a range of manoeuvres in each axis given the current vehicle state and performance limits, therefore ensuring that maximum performance manoeuvres in each axis are always available if required. The resolution of the grid may be set to match performance or memory requirements also employing non-steady manoeuvres (i.e. s-shape) in different axis if desired. The objective function can be used to select the preferred trajectory from this set of options, which can then be used as the starting point for the gradient search optimisation.

This set of feasible manoeuvres provides fundamentally useful information for any vehicle, manned or unmanned. For example, for a ground vehicle such as a manned road car, it can be used for visual indication of braking distances, turning circles, cornering performance, acceleration performance etc.. This information can usefully be used either as indications / warning to a driver or as a design aid for unmanned navigation.

In one example, this trajectory set is created by propagating the vehicle state entirely in the output space restraining trajectories by the vehicle performance data stored in an on-board performance map. Generation of this set of trajectories is performed using a set of desired speeds in each axis to propagate the current vehicle state towards. The speed demands used to create an example coarse grid are shown below:

- *Forward speed options* = $[u_{min}\ 0\ u_{max}]$

- *Lateral speed options* $[v_{min}\ 0\ v_{max}]$

- *Vertical speed options* = $[w_{min}\ 0\ w_{max}]$

This coarse grid is therefore comprised of three options in each of three axis, giving a total of $3^3$ = 27 candidate trajectories. Ideally, the feasible manoeuvre grid would be finely spaced, but there is obviously a computation cost associated with each option that is tested. The final grid size is a compromise between computational effort and reward in terms of avoidance of local minimums.

A trajectory designed by this approach may be passed directly to the control space layer for tracking, or alternatively it may be used as the starting point for the gradient based optimisation. However, before any optimisation can occur the chosen trajectory must be converted into the polynomial form used by the gradient search algorithm. This can be done by employing a least squares curve fitting technique, where a sixth order Bezier polynomial is matched to the desired trajectory. As the Bezier basis function matrices are all calculated off-line, so can the curve-fit matrix ($B_{least\_squares}$), therefore reducing the on-line curve-fitting process to a single matrix multiplication for each of the three speed profiles.

Combining the gradient based optimisation with the coarse grid of feasible manoeuvres allows a two stage trajectory design approach, where a candidate trajectory from the coarse grid may be used as the starting point for further optimisation using the gradient search. The coarse grid provides the breadth of manoeuvre options, ensuring that the edges of the manoeuvre envelope can be reached when necessary. The gradient based optimisation then performs the final trajectory shaping to get a desired level of performance. The true benefit of the optimisation step is therefore to provide accurate performance without requiring excessively large quantities of discrete manoeuvres to be either stored or generated on line.

It will be understood that evaluation of the objective function provided above requires the position error (defined as the Euclidean distance between a point of interest and the nearest point on the demanded trajectory) to be calculated along the length of each candidate receding horizon trajectory. A single nearest point calculation requires a search of nearby points on the demanded trajectory, possibly followed by an interpolation calculation to provide the required accuracy. If this process has to be repeated for each point on the receding horizon trajectory then the whole process repeated for every candidate trajectory, the computational effort rapidly becomes prohibitive.

In order to reduce the computational burden, selected embodiments perform a single nearest point calculation from the current vehicle position, then perform a least squares curve-fit to get a target section of the demanded trajectory that matches the receding time horizon. This is illustrated in Figure 6, where the current vehicle position and nearest point on the demanded trajectory are indicated, and the resulting target trajectory is shown by a series of crosses. It is this target section of the trajectory that is then used to calculate position errors in the objective function.

Using a linear model for the curve-fit process (a Bezier polynomial) allows a closed form solution to the least squares curve-fit process, where the design parameters for the curve are given by:

$$\mathbf{k}_{t\,arg\,et} = \left(\mathbf{B^T B}\right)^{-1} \mathbf{B^T Y} \tag{11}$$

*Where:*

**B** = *matrix of* Bezier *basis functions* ($B_{i,j}$ *is the* I[th] *basis function at the* J[th] *time step on the receding horizon*)
**Y** = *vector of data to perform the curve-fit to* ($Y_i$ *is the data point at the* I[th] *step along the desired data*)

The term $(\mathbf{B}^T\mathbf{B})^{-1}\mathbf{B}^T$ is fixed for a defined order and resolution of Bezier curve and can therefore be calculated and stored off-line. This means that the curve-fit process only requires a single matrix multiplication (for each data axis) at each trajectory design iteration, and is therefore highly efficient.

In addition to avoiding the computational burden described above, this approach also provides interpolation of the demanded trajectory to whatever resolution is preferred by the cost function used in the optimization process (the global trajectory may only be defined very coarsely).

It should be noted that as the target trajectory specifies a series of position, each with associated times (set by the position along the curve), then speed and acceleration is also implied by the position error, therefore removing the need for explicit terms in the cost function. This implied speed profile can also be used to provide time control (rather than speed control) without sacrificing position control by altering the length of the target trajectory, i.e. a shorter target trajectory causes a speed demand increase, and a longer target trajectory causes a speed demand decrease.

The performance of the present invention has been modelled for the case of a quadrotor MAV. A quadrotor MAV has been chosen because of it's greater maneuverability, ability to hover as well as take off and land vertically, this vehicle is considered to be a more realistic candidate for operation within complex low level environments that fixed wing MAVs.

The format chosen for the quadrotor performance map was:

- Min / max. forward speed (**u**), acceleration ($\dot{\mathbf{u}}$) & rate of change of acceleration ($\ddot{\mathbf{u}}$)
- Min / max lateral speed (**v**), acceleration ($\dot{\mathbf{v}}$) & rate of change of acceleration ($\ddot{\mathbf{v}}$)
- Min / max vertical speed(**w**), acceleration ($\dot{\mathbf{w}}$) & rate of change of acceleration (**w**)

In order to simplify the enforcement of performance constraints, the receding horizon trajectory was also described by forward, lateral and vertical speed profiles, with a separate polynomial defined for each. 4D receding horizon trajectories were therefore described by three polynomials as follows:

$$\mathbf{u}(t) = \sum_{i=0}^{6} \mathbf{k}_i^u \mathbf{B}_i(t) \tag{12}$$

$$\mathbf{v}(t) = \sum_{i=0}^{6} \mathbf{k}_i^v \mathbf{B}_i(t) \tag{13}$$

$$\mathbf{w}(t) = \sum_{i=0}^{6} \mathbf{k}_i^w \mathbf{B}_i(t) \tag{14}$$

.

Boundary conditions were enforced for the initial values of **u**, $\dot{\mathbf{u}}$, $\ddot{\mathbf{u}}$, **v**, $\dot{\mathbf{v}}$, $\ddot{\mathbf{v}}$, **w**, $\dot{\mathbf{w}}$, & **w**, therefore reducing the overall design space from twenty-one variables (seven for each axis) to twelve. The resolution used for the receding horizon trajectories was fifty (ie fifty discerte points or steps in each component axis) and the trajectory re-design rate was 0.2secs, providing a 10 second horizon at 10m/s. In alternative embodiments faster or slower design rates could be used, however this value is acceptable for initial assessment of the approach. Perfect vehicle tracking of the designed trajectories was assumed, with the starting state of each trajectory design iteration being the state 0.8secs from the start of the previously optimized trajectory. The objective function and solution procedure was then as described above.

By modelling in this way, the presently proposed control method can be shown to demonstrate accurate obstacle free trajectory tracking, trajectory acquisition and time control behaviour. In the case of encountered obstacles, the present technique can be shown to deviate slightly from the global trajectory to maintain a safe distance from obstacles which are close to, but do not intersect the global trajectory. Where obstacles do intersect the demanded trajectory, reasonable avoidance manoeuvres are made to avoid the obstacle, and the global trajectory is then re-acquired. The choice of avoidance direction is dependant on the gradient of the cost function in this example.

In order to test the robustness of the algorithms to disturbances several scenarios were tested with random disturbances (positions, speeds and accelerations) added to the vehicle state vector every few seconds. The impact of these disturbances is effectively to require regular trajectory re-acquire manoeuvres, often in the presence of obstacles. Simulated results show each of the disturbances followed by a smooth rejoin manoeuvre. As discussed above this capability is particularly important for micro air vehicles, for whom commonly experienced gusts and turbulence will be particularly disruptive.

In addition to static obstacles, the present approach to object or vehicle control can be applied to dynamic obstacles. A key factor in a receding horizon approach applied to a dynamic environments is the prediction of future positions of detected obstacles and other vehicles.

If the performance limits of the other vehicle / obstacle are known, then an estimate of the achievable positions over the horizon may be made. This would allow a defensive strategy to be implemented, effectively staying out of reach of the obstacle. However, for an unmanned vehicle estimating performance limits would be difficult. An approach used in certain embodiments of the present invention is to propagate the current obstacle state over the design horizon. For steady obstacles this provides accurate predictions, but for unsteady obstacles (and other vehicles) errors can result. Fundamentally, uncertainty over obstacle state data increases over the design horizon, with longer horizons resulting in greater uncertainty. By increasing required clearance distances across the design horizon, this uncertainty is mitigated to a degree. This approach also helps to provide strong intent signalling that aids the efficiency of decentralised uncooperative deconfliction.

For cooperative deconfliction it is assumed that each vehicle is able to provide a short range broadcast of it's own current receding horizon trajectory. No active coordination or negotiation is used, simplifying the cooperative approach to a simple transmit and listen system. It should be noted that the polynomial trajectory description is very compact, and is therefore well suited to a cooperative approach

For rule-based behaviour the vector product method can be used, based on the speed vectors of each vehicle. Due to the non-commutative nature of the vector product $(\bar{a} \times \bar{b} = -\bar{b} \times \bar{a})$ each vehicle can be directed in opposite directions, a property that is well suited to immediate term deconfliction. This approach can also be applied to multiple vehicles scenarios by considering sets of vehicle pairs, rather than the combination of multiple vehicles. Consideration is also given to provision of preferred rule-type behaviour such as not passing directly ahead of a moving obstacle. This behaviour may be implemented via either biasing the search or the cost function. Biasing the cost function is preferable as this helps maintain the simplicity of the search algorithm.

It will be understood that the present invention has been described above purely by way of example, and modification of detail can be made within the scope of the invention. The control frameworks described herein are not specific to a particular object or vehicle type, and can be applied in different ways to address different problems. A specific implementation for a quadrotor MAV has been discussed, but the control techniques proposed herein are applicable to a wide variety of air vehicles, both rotary and fixed wing, and also have potential application to land and marine vehicles and environments also.

Each feature disclosed in the description, and (where appropriate) the claims and drawings may be provided independently or in any appropriate combination.

**Claims**

1. A method of control of a vehicle, said method comprising the steps of:

   providing a global target trajectory,
   determining the current state of said vehicle,
   deriving from said current state trajectory performance limits for said vehicle,
   calculating an optimum local trajectory in 4D output space to approach said global trajectory and observe said performance limits,
   outputting control inputs corresponding to said selected trajectory, and
   updating the current state of said vehicle, and deriving updated trajectory performance limits and an updated optimum local trajectory accordingly.

2. A method according to Claim 1, wherein said local trajectory is calculated over a fixed time horizon.

3. A method according to Claim 1 or Claim 2, wherein said local trajectory is calculated as polynomial functions of a curve parameter.

4. A method according to Claim 3, wherein said local trajectory is calculated as three component polynomial functions.

5. A method according to Claim 4, wherein each component polynomial function represents velocity in three orthogonal axes.

6. A method according to any one of Claims 3 to 5, wherein said polynomial functions are 6th order.

7. A method according to any one of Claims 3 to 6, wherein initial boundary conditions are enforced on the polynomials.

8. A method according to any one of Claims 2 to 7 wherein said fixed time period/horizon is greater than or equal to 5 seconds.

9. A method according to any one of Claims 2 to 8 wherein said fixed time period/horizon is less than or equal to 20 seconds.

10. A method according to any preceding claim, wherein obstacles are represented as a cost penalty function during calculation of an optimum local trajectory.

11. A method according to any preceding claim, wherein said trajectory performance limits are represented as a cost penalty function during calculation of an optimum local trajectory.

12. A method according to Claim 10 or Claim 11, wherein said cost penalty function is a potential function.

13. A vehicle adapted for control by the method of any preceding claim.

14. A method for evaluating position errors along a proposed local object trajectory with respect to a desired object trajectory,
performing a nearest point calculation to determine the error for the current position of an object,
performing a curve fit to provide an approximation of said desired trajectory based on said nearest point calculation and the length of the local object trajectory, and
performing a series of position error calculations between said local object trajectory and said approximation.

Static
Obstacle

Before
Disturbance

After
Disturbance

Desired
Trajectory

Figure 1

Static Obstacle

MAV

Desired
Trajectory

Figure 2

Figure 3

Figure 4

Figure 5

Figure 6

Figure 7